# DEMANDE DE BREVET EUROPEEN

(11) **EP 0 542 634 A1**
(43) Date de publication de la demande: **19.05.1993**
(21) Numéro de dépôt: 92403070.3
(22) Date de dépôt: 13.11.1992
(51) Int. Cl.: C05F 17/02, C05F 17/00

(54) **Système pour l'élimination des déchets animaux et leur transformation en engrais organiques**

(30) Priorité: 14.11.1991 ES 9102526
(71) Demandeur: SLIR, S.L., E-31003 Pamplona (ES)
(72) Inventeur: Aranguren, Eduardo, Murcia (ES)
(74) Mandataire: Hasenrader, Hubert

(57) **Abrégé**

L'invention concerne un système pour l'élimination des déchets et leur transformation en engrais organiques, dans lequel on introduit dans une cuve d'homogénéisation (3,7) les déchets animaux à éliminer ainsi qu'un produit absorbant et des souches de bactéries, on déclenche un processus physique du mélange intime et homogène entre les déchets et l'absorbant, ainsi qu'un processus biochimique à l'aide des souches de bactéries et de stabilisants appropriés, jusqu'à obtenir une masse capable de donner lieu à une fermentation aérobie forcée dont le résultat final est la production d'un engrais organique.

## Description

L'implantation et le maintien en exploitation de l'élevage industriel en habitat rural a posé de graves problèmes de nuisance de l'environnement qui le subit, ce qui compromet l'avenir de cette activité.

Si l'on se limite à l'exploitation industrielle des élevages bovins et porcins, on observe que leurs aspects les plus négatifs proviennent de trois points concrets qui sont les clés de sa philosophie industrielle :
- la haute concentration de kilogrammes de viande que l'installation entretient par unité de surface ;
- le nombre élevé de têtes exigé par chaque exploitation pour rester rentable ;
- la solution pour le maintien de l'hygiène et de la santé de l'exploitation, qui est essentiellement basée sur la stabulation des animaux sur des grillages ou "caillebotis", placés au-dessus des fosses qui recueillent les excréments des animaux, ainsi que les eaux qui proviennent des fuites des abreuvoirs et du lavage des allées.

Ces trois facteurs ont pour résultat que toute une activité d'élevage implique la production parallèle de déchets, appelés lisier ou purin, qui sont mortels pour la vie animale et végétale aussi bien terrestre qu'aquatique, en raison de leur haute demande d'oxygène biologique, de la toxicité accumulée que suppose la concentration d'azote présente dans certains de leurs éléments constitutifs, et des volumes considérables de production de purin.

C'est ainsi qu'à titre de simple exemple indicatif, on doit considérer qu'un porc produit de 1 à 1,5 mètres cubes de purin dans les cent-quarante jours que dure sa période d'engraissement.

Or, en Espagne, on recense un nombre approximatif de quinze millions de porcs.

Du fait de cette réalité, l'élimination du purin est devenue un objectif prioritaire du secteur élevage.

Le but de l'invention est de réaliser un système pour l'élimination de ces déchets animaux qui soit tel qu'outre qu'il permet l'élimination de ces déchets ou de ce purin, il permet de fabriquer avec ces derniers des amendements ou engrais organiques, et tout ceci dans un processus continu et automatisable, ce qui se traduit par une élimination, elle aussi continue, de ces déchets très polluants.

Selon le but de l'invention, on crée un processus physique et biochimique des déchets ou du purin consistant à les introduire dans une cuve d'homogénéisation, conjointement avec un absorbant formé de préférence d'un sous-produit du secteur primaire, qui peut être de la tourbe, de la paille de céréales, de la sciure, des copeaux de bois, du fumier d'ovins, de veaux ou de poulets, etc..

La cuve d'homogénéisation reçoit le purin et l'absorbant, dosés dans les quantités appropriées et chronométrés dans leur temps d'acheminement.

On procède en outre, à l'intérieur de la cuve d'homogénéisation, à un saupoudrage de souches de bactéries.

Lorsque tout ceci est ainsi disposé à l'intérieur de la cuve d'homogénéisation, il se déclenche un processus physique de mélange intime et homogène entre les phases liquide (purin) et solide (absorbant) mises en contact, processus qui se déclenche après la rupture de la tension superficielle du purin.

De même, on obtient une présence efficace des souches de bactéries les plus adéquates pour transformer ce mélange ou cette pâte de purin et d'absorbant en une biomasse qui peut donner lieu à une fermentation aérobie rapide et soutenue pendant le temps nécessaire pour qu'on obtienne la dégradation de l'absorbant, en obtenant ainsi les premiers composés humiques à noyaux aromatiques.

Par un processus de fermentation forcée, dans lequel on assure un contrôle adéquat des facteurs température, aération et humidité, on obtient à la fin de ce processus des amendements ou engrais organiques.

De cette façon, le système de l'invention permet d'obtenir les avantages suivants :
- Il élimine totalement et de façon immédiate le problème écologique qui implique le purin produit par l'élevage industriel (porcin et bovin).
- Il permet d'éliminer, par exemple, la production journalière totale de purin d'une exploitation.
- Il détermine un circuit de production très précis, puisque la même masse d'absorbant neuf qui est utilisée chaque jour coïncide en principe à la masse d'engrais organique qu'on obtient finalement. Ceci détermine une consommation de matière sèche (l'absorbant) que l'on peut calculer à l'avance dans une planification exacte.
- Par recyclage des sous-produits et déchets du secteur primaire, on génère une plus-value qui est fonction de nouvelles qualités agronomiques acquises par ces sous-produits.
- L'engrais organique obtenu fournit aux terres productrices l'équilibre perdu, en éradiquant tous les problèmes de fertilité du sol et d'immunodéficience acquise.
- On parvient à réaliser un système d'automatisation totale.
- Le processus se déroule sans répandre d'odeurs à l'extérieur, sans risque d'infiltration dans le sous-sol et dans des conditions psychophysiologiques appropriées pour l'être humain, aussi bien sous l'aspect de la sécurité que sous l'aspect sanitaire.

On a constaté que le système est, par exemple, optimal du point de vue technique et économique pour la fabrication de compost pour la culture des champignons.

Pour mieux faire comprendre la nature de l'invention, nous représentons sur les dessins annexés, à titre d'exemple purement illustratif et non limitatif une forme préférée de réalisation industrielle à laquelle nous nous référons dans notre description. Et, sur ces dessins,
la figure 1 est une vue en plan de dessus et schématique d'une réalisation possible en ligne du système selon l'invention en tant qu'exemple non limitatif de réalisation du système ;
la figure 2 est une vue analogue à la précédente mais en perspective ;
la figure 3 montre en élévation l'équipement de transport pneumatique ;
la figure 4 est une vue en élévation de la cuve 3 ou 7, en coupe selon la ligne IV-IV indiquée sur la figure 5 ;
la figure 5 est une vue en plan de dessus des cuves 3 et 7 ;
la figure 6 est une vue en élévation de l'installation possédant des pistes 4 et 8 selon des trajets circonférentiels concentriques ;
la figure 7 est une vue en plan de dessus de l'objet de la figure précédente ;
les figures 8 et 9 montrent une installation analogue à celle des figures 6 et 7 et sont, comme celles-ci, respectivement une vue en élévation et en plan de dessus.

### Liste des références

- 1.: )
) lignes
- 2.: )
- 3.: Cuve d'homogénéisation
- 4.: Piste de fermentation
- 5.: )
) Auges réceptrices
- 6.: )
- 7.: Cuve d'homogénéisation
- 8.: Piste de fermentation
- 9.: Chariot
- 10.: )
) Silos
- 11.: )
- 12.: Alimentateur d'auge
- 13.: Couverture
- 14.: Structure de support
- 15.: Courroie collectrice
- 16.: Conduite d'aspiration
- 17.: Conduite
- 18.: Cyclone
- 19.: Bouche d'admission de l'absorbant
- 20.: Bouche d'admission du purin
- 21.: Agitateur électrique
- 22.: Extracteur de gaz
- 23.: Contrôleurs de niveau
- 24.: Déflecteurs
- 25.: Asperseurs
- 26.: Bras support

L'objet de l'invention est un système pour l'élimination des déchets animaux connus sous la désignation de purin, et pour leur recyclage sélectif ; de manière à permettre de produire des engrais organiques à partir de ces déchets.

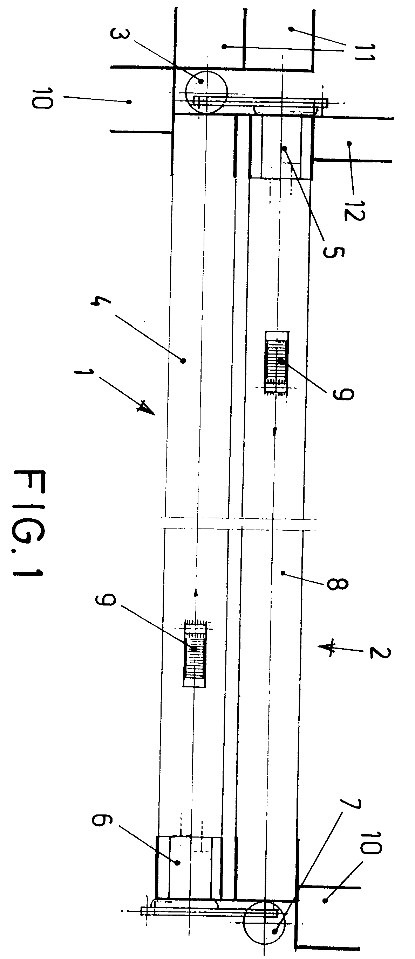

Sur les figures 1 à 5, on a représenté un exemple de réalisation pratique possible du système sans que cet exemple puisse être aucunement considéré comme limitatif.

Le système est composé de deux lignes 1 et 2 disposées parallèlement entre elles, avec des organes identiques en principe mais situés en sens inverse les uns des autres le long des lignes 1 et 2.

La ligne 1 est schématiquement composée d'une auge réceptrice 5 ; d'une cuve d'homogénéisation 3 et d'une piste de fermentation 4 ; tandis que la ligne 2 présente des organes identiques, désignés respectivement par les références 6, 7 et 8 et qui sont disposées en sens inverse des organes précités.

L'auge réceptrice 5 reçoit initialement un absorbant qui peut être composé de sous-produits du secteur primaire, comme la tourbe, la paille de céréales, la sciure de bois, les copeaux de bois, etc..

Cet absorbant est transporté de l'auge 5 à la cuve d'homogénéisation 3. De même, on introduit dans la cuve 3 les urines des animaux, appelées aussi purin. Dans la cuve 3, le purin et l'absorbant se mélangent intimement, dans un processus physique. En outre, on détermine un processus biologique et chimique en apportant à la cuve 3 des cultures de bactéries qui déclenchent un processus biochimique, les macro-éléments qui font partie des réactions chimiques se fixant par apport d'un stabilisant à la cuve 3.

A la sortie de la cuve 3, on obtient ainsi une biomasse qui passe à la piste de fermentation 4. Sur cette piste 4, un chariot 9 circule en retournant et en transférant le produit, de sorte que, par exemple, le produit qui sort de la cuve 3 et s'engage dans la piste 4 par l'extrémité qui correspond à la cuve 3 sort à l'autre extrémité de la piste 4 après écoulement d'un nombre déterminé de jours.

A l'extrémité de sortie de la piste 4, se trouve une auge réceptrice 6 d'où le produit est de nouveau dirigé vers une seconde cuve d'homogénéisation 7 de la ligne 2.

Dans cette cuve 7, le processus physique, chimique et biologique se répète, le produit obtenu passant alors à la piste de fermentation 8.

De nouveau, le chariot 9 transfère le produit vers l'autre extrémité de la piste 8 pendant une période représentant un nombre de jours pré-établi.

Le produit obtenu peut être transporté des auges de récupération 5 et 6 vers des silos 10 de produit final, ou bien le produit peut être de nouveau introduit de l'auge réceptrice 5 dans la cuve 3, en repétant ainsi le processus.

Si le produit obtenu chaque jour dans l'auge réceptrice 5 est transporté au silo 10 correspondant, on introduit dans la cuve 3 une nouvelle quantité d'absorbant et de purin tandis que, si le produit est de nouveau introduit dans la cuve 3, il n'est pas nécessaire de charger cette cuve d'absorbant et de purin.

Lorsqu'on a terminé tout un cycle, on obtient un produit final qui peut être un "amendement organique" ou un "engrais organique" selon le traitement biochimique effectué dans les cuves 3 et 6.

On a prévu des silos 11 de matières premières.

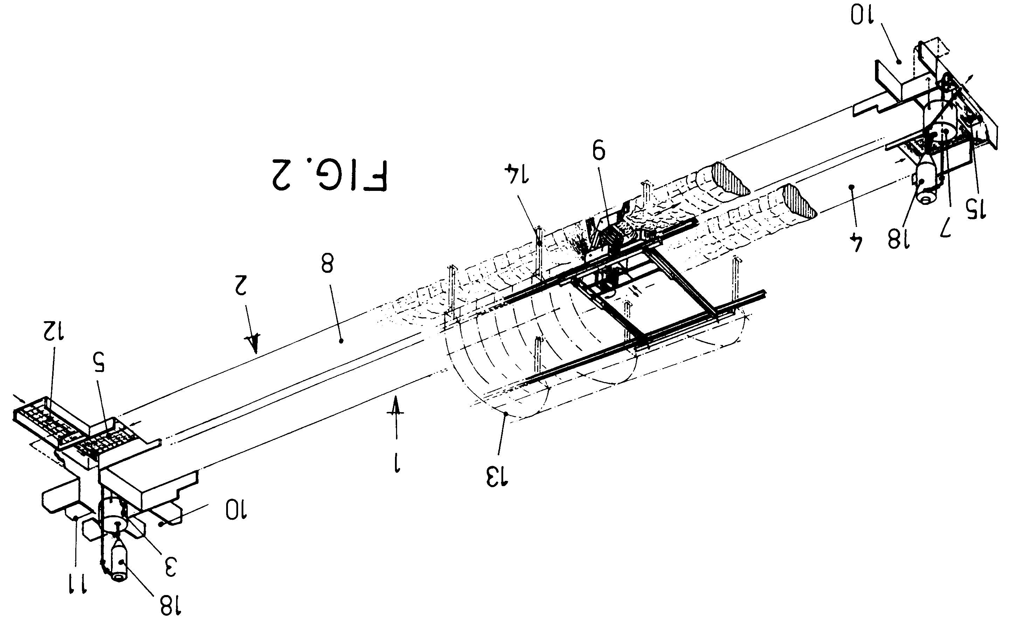

Selon une forme de réalisation pratique possible, représentée schématiquement sur la figure 2, on prévoit un alimentateur 12 d'auge, qui est constitué par un récipient métallique ou en béton armé disposé pour recevoir les différentes matières premières qui, une fois convenablement mélangées, composent l'absorbant.

A la base de l'alimentateur 12, sont prévus des moyens de transport et, à la sortie, est disposé un tambour broyeur, possédant des pics ou bras qui mélangent et fragmentent les matières premières qui composent l'absorbant de manière que ces matières, convenablement fragmentées et mélangées, tombent ensuite sur l'auge réceptrice 5.

L'auge réceptrice 5 est elle aussi composée d'un conteneur analogue à l'alimentateur 12, mais dépourvu du tambour broyeur. L'extraction du produit s'effectue à l'aide de poussoirs hydrauliques. On retrouve la même constitution dans l'auge 6.

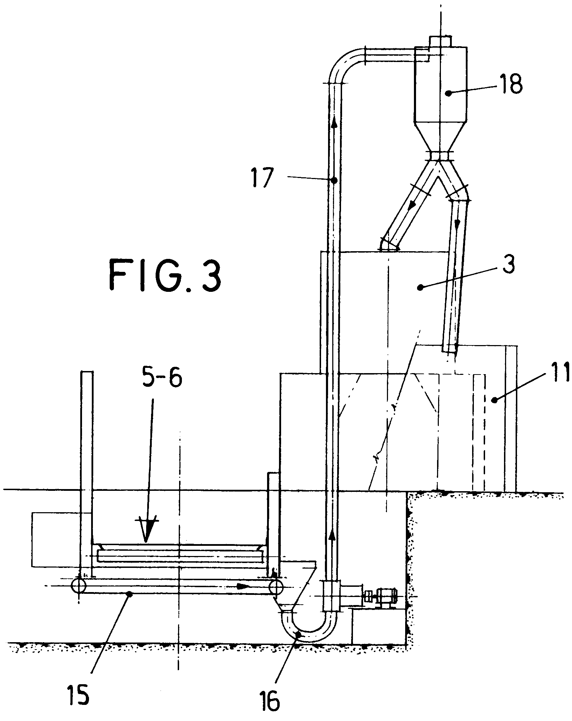

Le produit extrait de l'auge 5 est recueilli par une courroie collectrice 15 qui apporte l'absorbant à l'extrémité libre d'une conduite d'aspiration 16 appartenant à un système de transport pneumatique, voir figure 3, de sorte que l'absorbant est aspiré par le tube 16 et, ensuite, envoyé par la conduite 17 à un cyclone 18 à la sortie duquel le produit est sélectivement distribué vers la cuve d'homogénéisation 3 ou vers l'un des silos 11.

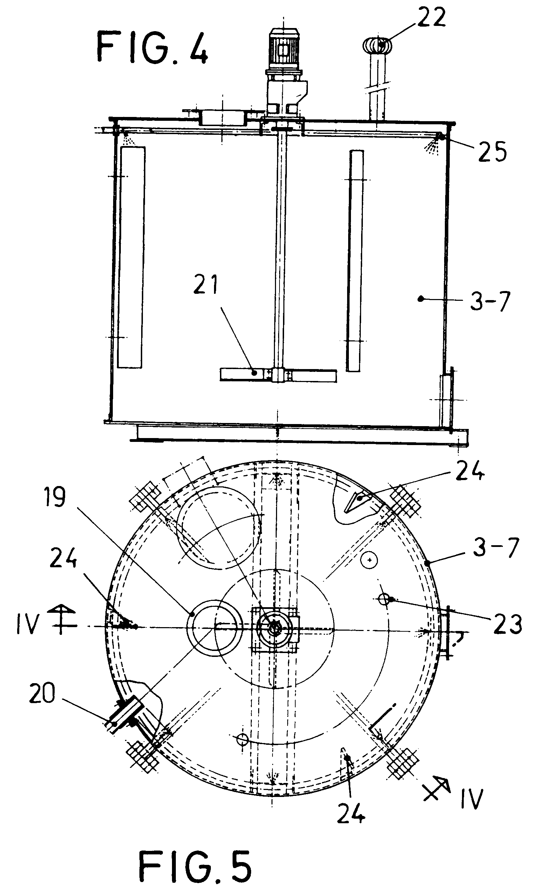

La cuve d'homogénéisation 3, qui est identique à la cuve 7 est composée, voir figures 4 et 5, de tôle convenablement traitée, et présente une bouche 19 d'admission de l'absorbant ; une bouche 20 d'admission du purin ; un agitateur électrique 21 qui détermine le processus physique de mélange de l'absorbant avec le purin ; un extracteur de gaz 22 ; des contrôleurs de niveau 23 ; des déflecteurs 24 destinés à faciliter le mélange de l'absorbant avec le purin, des asperseurs 25, et la sortie correspondante pour le produit déjà homogénéisé à la piste de fermentation 4.

Les pistes de fermentation 4 et 8 sont abritées sous une couverture 13 supportée par une structure 14 dans laquelle est monté un pont roulant qui supporte une tourelle à laquelle est suspendu le chariot de retournement 9, voir figure 2.

Le chariot de retournement 9 est composé d'un tambour broyeur et d'un élévateur à godets ou tasseaux, de sorte que le tambour broie et retourne la biomasse des pistes 4 et 8 qui, ensuite, est reprise par les godets ou tasseaux. De cette façon, la biomasse reprise à la partie avant du chariot est transférée à la partie arrière en parcourant toute la longueur du chariot 9.

Le même chariot 9 se déplace de l'une à l'autre des pistes 4 et 8 et il pivote pour rester disposé de manière à pouvoir être utilisé indifféremment sur n'importe laquelle de ces pistes.

La biomasse gui sort de la cuve 3 est ainsi transportée jour après jour le long de la piste 4, et elle demande quinze jours pour parcourir toute la piste 4. A l'extrémité de la piste 4, un système de transport pneumatique tel que celui déjà décrit, comportant un cyclone 18, transfère la biomasse à la cuve 7 ou au silo collecteur 10.

Au droit des cuves 3 et 7, sont prévus un doseur de bactéries et un doseur de stabilisant. Le doseur de bactéries permet d'introduire dans les cuves 3 et 7 des cultures de bactéries qui accélèrent et renforcent le processus biochimique tandis que le stabilisant est principalement destiné à fixer les macro-éléments qui font partie des réactions chimiques.

Il est prévu par ailleurs, en combinaison avec le chariot 9, des sondes et autres organes classiques de contrôle qui permettent de contrôler à tout moment la température, le degré d'humidité et le degré d'aération de la biomasse des pistes 4 et 8 en différents points de la longueur de ces dernières ; de manière que ces valeurs restent à la valeur préfixée et, si elles varient, l'installation comprend des moyens techniques classiques de chauffage, arrosage et aération, pour rétablir les valeurs prédéterminées.

De cette façon, en contrôlant exactement les conditions de température, humidité et aération de la biomasse le long des pistes 4 et 8, on parvient à maintenir les valeurs établies qui permettent le déroulement d'une fermentation aérobie en présence d'oxygène, fermentation qui se produit sans dégager d'odeurs.

De la cuve 7, la biomasse est transportée à la piste 8 et, de nouveau, en un cycle de quinze jours, la biomasse est transportée le long de la piste 8 jusqu'à ce qu'elle parvienne à l'autre extrémité ; de manière qu'alors, soit elle est déposée dans le silo 10 correspondant, soit elle est à nouveau introduite dans la cuve 3.

De cette façon, à la fin du processus, qui a duré trente jours, on obtient un engrais organique ou un amendement organique, selon les processus biochimiques qui se sont déroulés, et ce procédé peut être abrégé, en obtenant ainsi des produits qui peuvent être utilisés de nouveau comme absorbant ou bien comme combustibles, etc..

Il est évident que le même système peut se dérouler avec de multiples variantes relatives à son exécution pratique ; du fait que les organes constitutifs de l'installation évolueront dans le temps en accord avec les progrés techniques sans que ceci n'altère le principe essentiel de l'invention.

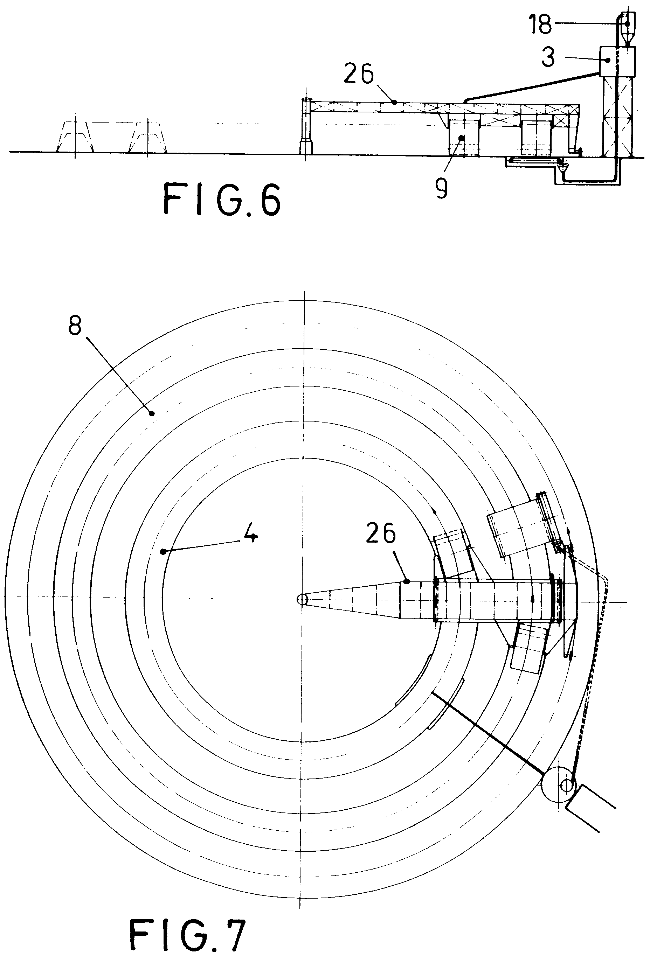

C'est ainsi qu'il a été prévu que les pistes de fermentation 4 et 8 peuvent présenter une disposition en superposition verticale, l'une se trouvant au-dessus de l'autre, de manière à occuper un plus petit espace, ou bien qu'elles peuvent présenter une trajectoire non rectiligne, selon un parcours en ligne mixte qui pourra être adapté aux espaces et aux nécessités de chaque installation et, par exemple, sur les figures 6, 7, 8 et 9, on a représenté des réalisations dans lesquelles ces pistes 4 et 8 s'étendent selon des trajectoires en arcs de cercles concentriques.

Dans la réalisation des figures 6 et 7, la cuve d'homogénéisation 3 et les autres organes correspondants sont disposés tangentiellement à l'extérieur des pistes annulaires 4 et 8, et il est prévu un bras support 26 qui tourne sur un pivot central et à l'aide de roues motrices extrêmes, ce bras support 26 supportant deux chariots 9 qui sert à retourner la biomasse. L'ensemble travaille sur une base ou semelle circulaire en béton.

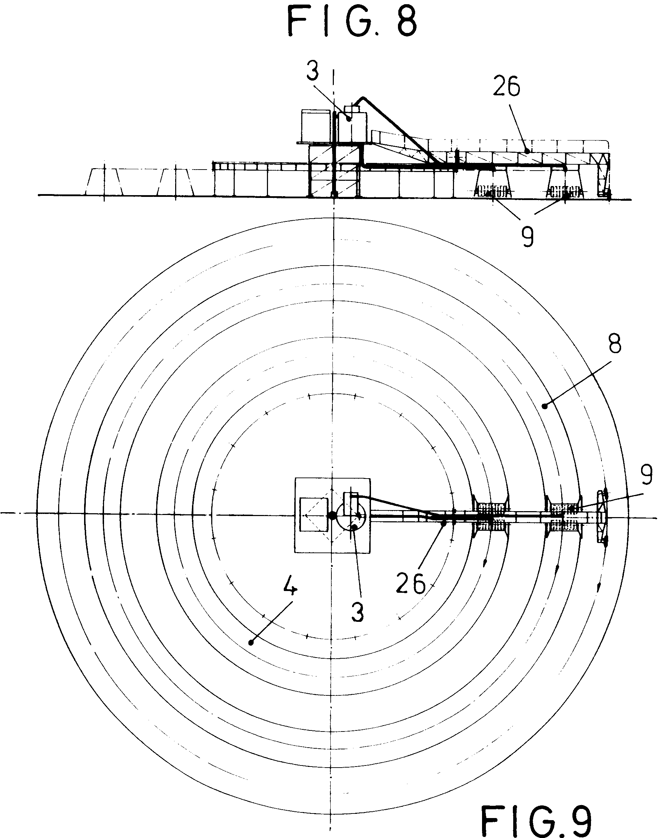

Dans la réalisation des figures 8 et 9, la cuve d'homogénéisation 3 et les organes correspondants occupent une disposition centrale.

Les réalisations décrites présentent des pistes de fermentation 4 et 8 qui constituent une solution adéquate pour la production d'une fermentation forcée qui donne naissance à l'engrais organique. Dans le cas où l'on désire obtenir un amendement organique, il n'est pas absolument nécessaire d'utiliser les pistes 4 et 8, et l'on a prévu que, de la cuve d'homogénéisation 3, la biomasse passe à un bassin de réception d'où la biomasse est extraite, au moyen d'une pelle chargeuse ou machine analogue, et déposée sur une dalle, sur laquelle cette biomasse est amoncelée à l'aide du chariot de retournement 9. La fermentation forcée se produit sur cette dalle, selon un processus qui peut durer environ quinze jours et, après ce temps, la biomasse fermentée est transférée à une plage de fermentation passive ou de maturation du produit fabriqué.

Les réalisations décrites jusqu'à présent permettent d'éliminer le purin et de fabriquer un amendement ou engrais organique. Toutefois, il est évident qu'avec les mêmes principes que ceux décrits jusqu'à présent, on peut réaliser une installation qui a pour seule fin l'élimination du purin, auquel cas l'installation ne présenterait pas les pistes de fermentation 4 et 8 ni les chariots de retournement 9 non plus que les autres éléments nécessaires pour assurer une fermentation forcée.

La nature de la présente invention, ainsi que sa réal isation industrielle ayant été décrites suffisamment, il suffit d'ajouter qu'il est possible d'apporter à son ensemble et à ses parties constituves des changements de forme, de matière et de disposition sans sortir du cadre de l'invention, dans la mesure où ces altérations ne dénaturent pas son principe.

## Revendications

1. Système pour l'élimination des déchets animaux et leur recyclage pour la fabrication d'engrais organiques, caractérisé en ce qu'on introduit dans une cuve d'homogénéisation (3,7) des déchets animaux à éliminer, en même temps qu'un produit absorbant et que des souches de bactéries, on déclenche un processus physique de mélange intime et homogène entre les déchets et l'absorbant, ainsi qu'un processus biochimique à l'aide des souches de bactéries et de stabilisants appropriés, jusqu'à obtenir une masse capable de donner lieu à une fermentation aérobie forcée dont le résultat final est la production d'un engrais organique.

2. Système pour l'élimination des déchets animaux et leur recyclage pour la fabrication d'engrais organiques selon la revendication 1, caractérisé en ce que chaque cuve d'homogénéisation (3,7) est combinée à une piste de fermentation (4,8) forcée dans laquelle un chariot de retournement (9) fragmente et retourne la biomasse jusqu'à ce qu'au bout d'un certain temps, cette biomasse se transforme en un engrais organique.

3. Système pour l'élimination des déchets animaux et leur recyclage pour la fabrication d'engrais organiques caractérisé en ce qu'elle comprend des pistes de fermentation (4,8) situées l'une à côté de l'autre dans une disposition paraxiale, des cuves d'homogénéisation (3,7) respectives placées aux extrémités opposées, et, à côté de ces cuves (3,7), les auges réceptrices (5,6), les alimentateurs (12), les organes de transport (15,16) et des autres organes prévus pour la manipulation et le transport des déchets, de l'absorbant et de la biomasse obtenue par le mélange des déchets et de l'absorbant.

4. Système pour l'élimination des déchets animaux et leur recyclage pour la fabrication d'engrais organiques selon la revendication 3, caractérisé en ce que que les pistes de fermentation (4,8) s'étendent selon des trajectoires circonférentielles concentriques, la dimension et l'extension de ces pistes étant fonction de l'espace et des nécessités concrètes de chaque installation.

5. Système pour l'élimination des déchets animaux et leur recyclage pour la fabrication d'engrais organiques selon la revendication 1, caractérisé en ce que l'absorbant est un sous-produit du secteur primaire, par exemples, des sciures, des copeaux de bois, de la paille de céréale, de la tourbe ou du fumier d'ovins, de veaux ou de poulets.

6. Système pour l'élimination des déchets animaux et leur recylage pour la fabrication d'engrais organiques, selon la revendication 3 ou 4, caractérisé en ce que, dans chaque cuve d'homogénéisation (3,7) est disposé un agitateur électrique (21) qui détermine le mélange intime du purin et de l'absorbant.

7. Système pour l'élimination des déchets animaux et leur recyclage pour la fabrication d'engrais organiques, selon la revendication 3 ou 4, caractérisé en ce que les pistes de fermentation (4,8) sont abritées sous une structure de couverture (13), cependant qu'à l'aide du chariot de retournement (9) s' effectue le contrôle des constantes de température, degré d'humidité et aération de la biomasse, les moyens techniques classiques nécessaires étant prévues pour maintenir des valeurs prédéterminées auxquelles se déroule la fermentation aérobie.
